# EUROPÄISCHE PATENTANMELDUNG

(11) **EP 1 087 282 A2**
(43) Veröffentlichungstag der Anmeldung: **28.03.2001**
(21) Anmeldenummer: 00113456.8
(22) Anmeldetag: 24.06.2000
(51) Int. Cl.: G05F 1/00

(54) **Schnittstelle**

(30) Priorität: 12.07.1999 DE 19932066
(71) Anmelder: elero GmbH, 72660 Beuren (DE)
(72) Erfinder: Walddörfer, Dieter, 73252 Lenningen (DE)
(74) Vertreter: Patentanwälte Westphal, Mussgnug & Partner

(57) **Zusammenfassung**

Rolladenantriebe und Antriebe für ähnliche Behänge sind mit einem mit Netzspannung betriebenen Elektromotor, einer Steuerschaltung und einem Taster ausgerüstet. Um einen Rolladenantrieb universell und weitgehend unabhängig von der zur Verfügung stehenden Spannung einsetzen zu können, ist eine Schnittstelle (S) mit einem Widerstandsnetzwerk (R1 bis R7) vorgesehen, das so diminsioniert ist, daß eine Steuerschaltung (P1) über Taster (T1, T2) mit der Netzspannung oder mit einer Niedervoltspannung als Steuerspannung beaufschlagbar ist.

## Beschreibung

Die Erfindung betrifft eine Schnittstelle mit mindestens einem Ein/Ausgang und mindestens einem Ausgang, an dem eine erste mit einer Niedervoltspannung ansteuerbare erste Steuerschaltung anschließbar ist.

Antriebe für Behänge, wie z. B. Rolläden, Jalousien, Sonnenblenden oder Markisen, sind mit einem Elektromotor, der mit der Netzspannung betrieben wird, einer Schnittstelle, einem Getriebe und einem Bedienteil ausgerüstet. Zur Steuerung des Antriebs von Hand ist das Bedienteil, auf dem Tasten zum Drücken angeordnet sind, über ein Steuerkabel mit der Schnittstelle des Antriebes verbunden.

Weil die Versorgungsspannung für die Schnittstelle und das Bedienteil im Niedervoltbereich liegt, ist ein Netzteil erforderlich, um die Netzspannung auf die niedere Versorgungsspannung zu transformieren. Dieses Netzteil vergrößert aber die Abmessungen und das Gewicht des Antriebes in nachteiliger Weise. Die Versorgungsspannung und die Schnittstelle müssen aufeinander abgestimmt sein. Je nach Aufbau und der Dimensionierung ist eine andere Versorgungsspannung erforderlich.

Es ist daher Aufgabe der Erfindung, einen Schnittstelle so zu gestalten, daß ein einfacherer Aufbau des Gerätes erzielt wird, in welchem die Schnittstelle eingesetzt ist, und daß die Schnittstelle in weiten Bereichen unabhängig von der Spannung ist.

Die Erfindung, eine Schnittstelle mit mindestens einem ersten Eingang und mindestens einem ersten Ausgang, an den eine mit einer Niedervoltspannung ansteuerbare erste Steuerschaltung anschließbar ist, löst diese Aufgabe dadurch, daß in der Schnittstelle zwischen dem ersten Eingang und dem ersten Ausgang ein Widerstandsnetzwerk liegt, das so dimensioniert ist, daß an den Eingang die Netzspannung oder eine Niedervoltspannung zur Ansteuerung der ersten Steuerschaltung anlegbar ist.

Dadurch daß die Schnittstelle auch mit der Netzspannung betreibbar ist, entfällt ein Netzteil, um eine gesonderte Versorgungsspannung für die Schnittstelle zu erzeugen. Ein Rollladenantrieb mit der erfindungsgemäßen Schnittstelle benötigt daher kein Netzteil für das Bedienteil mit den Tasten, denn die Schnittstelle und das Bedienteil werden beide mit der Netzspannung betrieben.

Wegen der besonders gewählten Dimensionierung des in der Schnittstelle vorgesehenen Widerstandsnetzwerkes ist die Schnittstelle aber auch mit einer Niedervoltspannung wie bei bekannten Rolladenantrieben betreibbar, so daß ein Rolladenantrieb mit der erfindungsgemäßen Schnittstelle entweder mit einem Bedienteil für die Netzspannung oder für eine Niedervoltspannung ausgerüstet werden kann. Eine Anpassung der Versorgungsspannung an die Schnittstelle ist aber nicht mehr erforderlich. Wegen der erfindungsgemäßen Schnittstelle ist der Rolladenantrieb universell und weitgehend unabhängig von der Versorgungsspannung einsetzbar.

Die Erfindung wird nun anhand der in den Figuren der Zeichnung abgebildeten Ausführungs- und Anwendungsbeispiele der Erfindung beschrieben und erläutert.

Es zeigen:
- Fig. 1: ein erstes Ausführungsbeispiel,
- Fig. 2: ein erstes Anwendungsbeispiel,
- Fig. 3: ein zweites Anwendungsbeispiel,
- Fig. 4: ein drittes Anwendungsbeispiel und
- Fig. 5: ein viertes Anwendungsbeispiel der Erfindung.

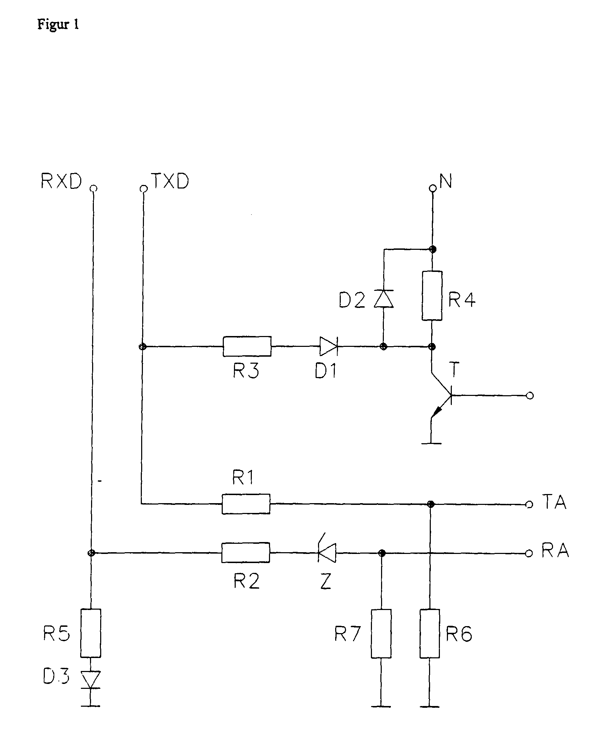

Die Erfindung wird nun anhand des in der Fig. 1 dargestellten ersten Ausführungsbeispieles beschrieben und erläutert.

Der Ein/Ausgang TXD der Schnittstelle ist über einen Widerstand R1 mit dem Ausgang TA verbunden. Der Eingang RXD ist über eine Reihenschaltung aus einem Widerstand R2 und einer Zenerdiode Z mit dem Ausgang RA der Schnittstelle verbunden. Der Eingang RXD liegt über einer Reihenschaltung aus einem Widerstand R5 und einer Diode D3 auf Bezugspotential, während der Ein/Ausgang TXD über eine Reihenschaltung aus einem Widerstand R3 und einer Diode D1 mit dem Kollektor eines Transistors T verbunden ist, dessen Emitter auf Bezugspotential liegt. Der Kollektor des Transistors T ist über eine Parallelschaltung aus einem Widerstand R4 und einer Diode D2 mit dem Neutralleiter N des Netzes verbindbar. Der Ausgang TA liegt über einen Widerstand R6 und der Ausgang RA über einen Widerstand R7 auf Bezugspotential. An die Basis des Transistors T sowie an die beiden Ausgänge TA und RA ist die erste Steuerschaltung P1 anschließbar.

Die Widerstände R1 bis R7 des Widerstandsnetzwerkes sind so dimensioniert, daß an den Ein/Ausgang TXD und den Eingang RXD die Netzspannung oder eine Niedervoltspannung anlegbar sind, ohne daß die erste Steuerschaltung dadurch in ihrer Funktion beeinträchtigt oder gar zerstört wird. Die Widerstände R1, R2, R3 und R5 können beispielsweise als Widerstandsketten mit mehreren Widerständen aufgebaut sein.

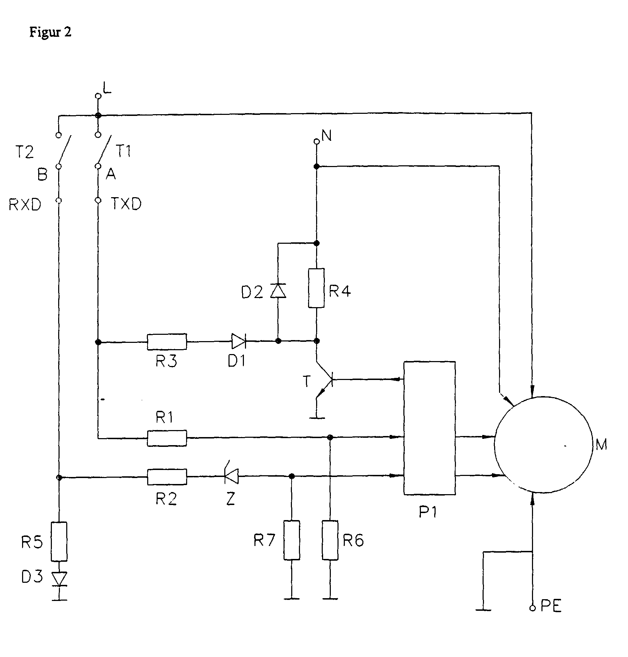

Die Erfindung wird nun weiter beschrieben und erläutert anhand des in der Fig. 2 abgebildeten ersten Anwendungsbeispieles.

An die Basis des Transistors T sowie an die Ausgänge TA und PA der Schnittstelle S ist die erste Steuerschaltang P1 angeschlossen, die z.B. als Microprozessor, Microcomputer oder Microcontroller ausgeführt sein kann und den Motor M des Antriebes über Steuerleitungen steuert. Der Kollektor des Transistors T ist über die Parallelschaltung aus dem Widerstand R4 und der Diode D2 mit dem Neutralleiter N des Netzes verbunden. Der Ein/Ausgang TXD der Schnittstelle S ist über eine Steuerleitung A und einen Taster T1 mit dem Phasenleiter L verbunden und ebenso ist der Eingang RXD der Schnittstelle S über eine Steuerleitung B und einen Taster T2 mit dem Phasenleiter L verbunden. Der Schutzleiter PE liegt auf Bezugspotential an der Schnittstelle.

Der Ein/Ausgang TXD der Schnittstelle S dient beim ersten Anwendungsbeispiel ebenso wie der Eingang RXD nur als Eingang für eines der beiden Signale, welche die Drehrichtung des Motors bestimmen.

Der Motor M wird durch Drücken des Tasters T1 bzw. T2 für Aufwärts- bzw. Abwärtsfahrt gesteuert. Die Netzspannung in Höhe von 230 V darf an den Eingängen TXD und RXD der Schnittstelle anliegen, weil die Steuerschaltung P1 durch das Widerstandsnetzwerk aus den Widerständen R1 bis R7 wirksam vor überhöhter Spannung geschützt ist. Durch Drücken des Tasters T1 wird z. B. ein Rolladen hochgefahren, während er durch Drücken des Tasters T2 ausgefahren wird. An die beiden Steuerleitungen A und B können mehrere Einheiten bestehend aus der erfindungsgemäßen Schnittstelle S der ersten Steuerschaltung und dem Motor parallel geschaltet sein. Beispielsweise ist die Schnittstelle so dimensioniert, daß bis zu acht Einheiten parallel geschaltet werden können.

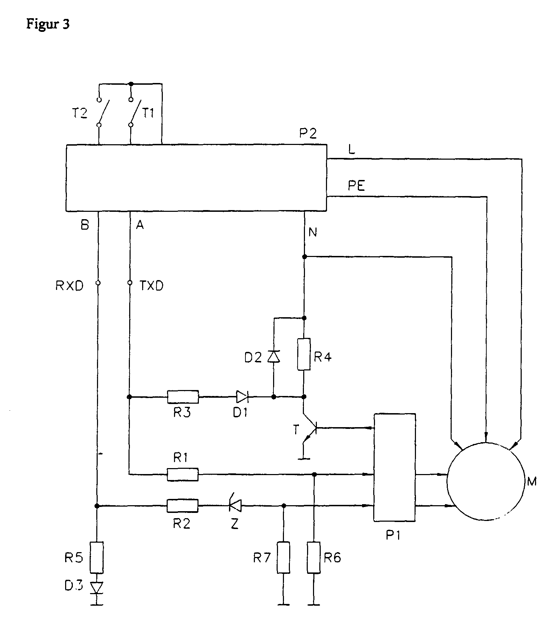

Es wird nun das in der Fig. 3 gezeigte zweite Anwendungsbeispiel der Erfindung beschrieben und erläutert.

Wie beim ersten Anwendungsbeispiel der Erfindung ist an die Basis des Transistors T sowie an die beiden Ausgängen TA und RA der Schnittstelle S die erste Steuerschaltung P1 angeschlossen, die über eine Steuerleitung den Motor M steuert.

Der Ein/Ausgang TXD der Schnittstelle S ist über eine Steuerleitung A mit einem Eingang einer zweiten Steuerschaltung P2 verbunden, deren Steuerausgang über eine Datenleitung B mit dem Eingang RXD der Schnittstelle verbunden ist. Auf der Bedienerseite der zweiten Steuerschaltung P2 sind zwei Taster T1 und T2 angeschlossen. Ebenso wie beim ersten Anwendungsbeispiel sind der Phasenleiter L, der Neutralleiter N sowie der Schutzleiter PE des Netzes mit dem Motor M verbunden. Der Schutzleiter PE kann außerdem am Bezugspotential der Schnittstelle S liegen.

Durch Drücken des Tasters T1 bzw. T2 gibt die Steuerschaltung P2 Steuersignale im Niedervoltbereich an die Schnittstelle S ab, die den Motor M steuern. Bei dem zweiten Anwendungsbeispiel liegt die Netzspannung am Motor M, nicht jedoch mehr an der Schnittstelle S. Durch eine geeigente Dimensionierung des Widerstandsnetzes aus den Widerständen R1 bis R7 in der Schnittstelle S ist die Steuerschaltung P1 auch mit Steuersignalen im Niedervoltbereich ansteuerbar. Der Ein/Ausgang TXD hat beim zweiten Anwendungsbeispiel nur die Funktion eines Ausganges für von der Steuerschaltung P1 zur Steuerschaltung P2 zu sendende Daten.

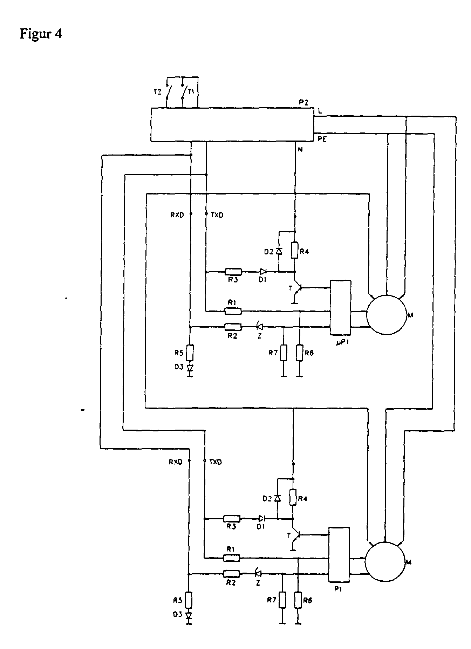

In der Fig. 4 ist ein drittes Anwendungsbeispiel der Erfindung gezeigt, das sich vom zweiten in der Fig. 3 abgebildeten Anwendungsbeispiel dadurch unterscheidet, daß an die Steuerschaltung P2 mehrere Antriebseinheiten aus je einer Schnittstelle S, einer Steuerschaltung P1 sowie aus einem Motor M angeschlossen sind. Es können beispielsweise bis zu acht solcher Antriebseinheiten an die Steuerschaltung P2 angeschlossen sein.

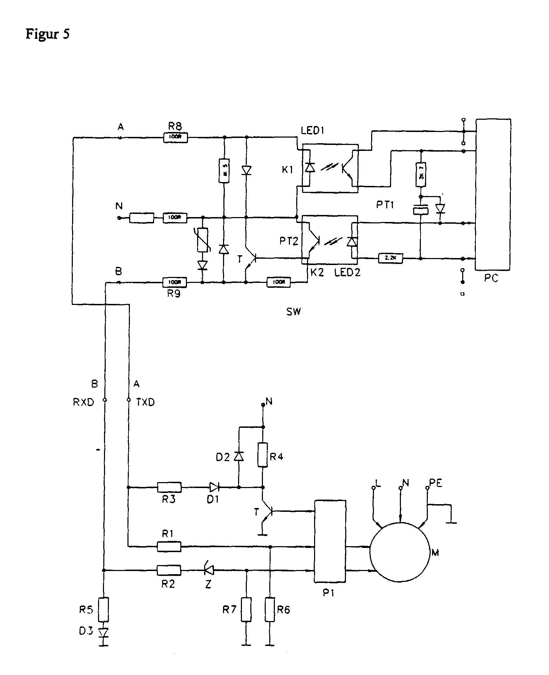

Es wird nun das in der Fig. 5 abgebildete vierte Anwendungsbeispiel der Erfindung beschrieben und erläutert.

Beim vierten Anwendungsbiespiel wird der Motor M von einem Personalcomputer PC gesteuert, der über einen Schnittstellenwandler SW mit der Schnittstelle S verbunden ist. Im Schnittstellenwandler SW sind ein Optokoppler K1 und ein Optokoppler K2 vorgesehen. Die Leuchtdiode LED1 des Optokopplers K1 ist in Reihe zum Phototransistor PT2 des Optokopplers K2 geschaltet, wobei die Anode der Leuchtdiode LED 1 mit dem Kollektor des Phototransistors PT verbunden ist. Die Kathode der Leuchtdiode LED1 ist über einen Widerstand R8 und eine Steuerleitung A mit dem Ein/Ausgang TXD der Schnittstelle S verbunden, während der Emitter des Phototransistors PT2 über einen Widerstand R9 und eine Steuerleitung B mit dem Eingang RXD der Schnittstelle verbunden ist. Der Phototransistor PT1 des einen Optokopplers K1 und die Leuchtdiode LED2 des anderen Optokopplers K2 sind über eine mehrpolige Steckverbindung V mit dem Personalcomputer PC verbunden. Der Personalcomputer PC sendet über den Optokoppler K2 Steuersignale zum Motor M, dagegen empfängt er über den Optokoppler K1 Steuer- und Zustandssignale des Motors M. Der Ein/Ausgang TXD hat beim vierten Anwendungsbeispiel nur die Funktion eines Ausganges für von der Steuerschaltung P1 zum Schnittstellenwandler SW zu sendende Daten.

Die erfindungsgemäße Schnittstelle ist allgemein in allen Bereichen einsetzbar, wo Schnittstellen eingesetzt werden. Sie ist jedoch insbesondere für Antriebe für Behänge, wie die eingangs erwähnten Rolladen-, Jalousien-, Sonnenblenden- oder Markisenantriebe geeignet.

Die Steuerschaltung P1 erkennt an der Signalform, welche Betriebsart vorliegt, ob die Steuerbefehle durch unmittelbare Netzeinspeisung mittels der von Hand betätigten Taster oder von der steuerschaltung P2 oder dem Personalcomputer PC erzeugt werden. Ohne Umschalt- oder Umrüstungsmaßnahmen kann ein Antrieb mit der erfindungsgemäßen Schnittstelle wahlweise unmittelbar durch die Netzspannung oder durch in der elektronischen Datenverarbeitung übliche Datensignale gesteuert werden.

### Bezugszeichenliste

- A: Steuerleitung
- B: Steuerleitung
- D1: Diode
- K1: Optokoppler
- K2: Optokoppler
- L: Phasenleiter
- LED1: Leuchtdiode
- LED2: Leuchtdiode
- M: Motor
- N: Neutralleiter
- PC: Personalcomputer
- PE: Schutzleiter
- PT1: Phototransistor
- PT2: Phototransistor
- R1-R9: Widerstand
- RXD: Eingang
- S: Schnittstelle
- SW: Schnittstellenwandler
- T: Transistor
- T1: Taster
- T2: Taster
- TXD: Ein/Ausgang
- V: Steckverbindung
- Z: Zehnerdiode
- P1: Steuerschaltung
- P2: Steuerschaltung
- RA: Ausgang
- TA: Ausgang

## Patentansprüche

1. Schnittstelle (S) mit mindestens einem ersten Ein/Ausgang (TXD) und mindestens einem ersten Ausgang (TA), an den eine mit einer Niedervoltspannung ansteuerbare erste Steuerschaltung (P1) anschließbar ist,
**dadurch gekennzeichnet,**
daß in der Schnittstelle (S) zwischen dem ersten Ein/Ausgang (TXD) und dem ersten Ausgang (TA) ein Widerstandsnetzwerk (R1 bis R7) liegt, das so dimensioniert ist, daß an den Eingang (TXD) die Netzspannung oder eine Niedervoltspannung zur Ansteuerung der ersten Steuerschaltung ( P1) anlegbar ist.

2. Schnittstelle nach Anspruch 1,
**dadurch gekennzeichnet,**
daß ein zweiter Eingang (RXD) und ein zweiter Ausgang (RA) vorgesehen sind, daß der erste Eingang (TXD) über einen ersten Widerstand (R1) mit dem ersten Ausgang (TA) verbunden ist, daß der zweite Eingang (RXD) über eine erste Reihenschaltung aus einem zweiten Widerstand (R2) und einer Zenerdiode (Z) mit dem zweiten Ausgang (RA) verbunden ist, daß der erste Ein/Ausgang (TXD) über eine zweite Reihenschaltung aus einem dritten Widerstand (R3) und einer ersten Diode (D1) mit dem Kollektor eines Transistors (T) verbunden ist, dessen Emitter auf Masse liegt und dessen Kollektor über eine Parallelschaltung aus einer zweiten Diode (D2) und einem vierten Widerstand (R4) mit dem Neutralleiter (N) des Netzes verbindbar ist, daß der zweite Eingang (RXD) über eine dritte Reihenschaltung aus einem fünften Widerstand (R5) und einer dritten Diode (D3) auf Masse liegt, daß der erste Ausgang (TA) über einen sechsten Widerstand (R6) und der zweite Ausgang (RA) über einen siebten Widerstand (R7) auf Masse liegt und daß der Schutzleiter (PE) bzw. die Erde des Netzes an Masse anschließbar ist.

3. Schnittstelle nach Anspruch 1 oder 2,
**dadurch gekennzeichnet,**
daß die erste Steuerschaltung ( P1) an die Ausgänge (TA, RA) und an die Basis des Transistors (T) angeschlossen ist.

4. Schnittstelle nach Anspruch 3,
**dadurch gekennzeichnet,**
daß die erste Steuerschaltung ( P1) ein Microprozessor, ein Microcomputer oder ein Microcontroller ist.

5. Schnittstelle nach einem der Ansprüche 1 bis 4,
**dadurch gekennzeichnet,**
daß der erste Ein/Ausgang (TXD) über eine erste Steuerleitung (A) und einen ersten Taster (T1) und daß der zweite Eingang (RXD) über eine zweite Steuerleitung (B) und einen zweiten Taster (T2) an den Phasenleiter (L) des Netzes angeschlossen sind, daß der Kollektor des Transistors (T) über die Parallelschaltung aus dem vierten Widerstand (R4) und der zweiten Diode (D2) an den Neutralleiter (N) des Netzes angeschlossen ist und daß der Schutzleiter (PE) bzw. die Erde des Netzes auf Masse liegt.

6. Schnittstelle nach einem der Ansprüche 1 bis 4,
**dadurch gekennzeichnet,**
daß an den Ein/Ausgang (TXD)und den Eingang (RXD) der Schnittstelle (S) eine zweite Steuerschaltung ( P2) mit mindestens einem Taster (T1, T2) angeschlossen ist.

7. Schnittstelle nach Anspruch 6,
**dadurch gekennzeichnet,**
daß an die zweite Steuerschaltung ( P2) die Ein/Ausgänge (TXD) und die Eingänge (RXD) mehrerer Schnittstellen (S) parallel angeschlossen sind.

8. Schnittstelle nach Anspruch 6 oder 7,
**dadurch gekennzeichnet,**
daß die zweite Steuerschaltung ( P2) ein Personalcomputer (PC) ist.

9. Schnittstelle nach einem der Ansprüche 6 bis 8,
**dadurch gekennzeichnet,**
daß zwischen der ersten und der zweiten Steuerschaltung ( P1, PC) ein Schnittstellenwander (SW) mit je einem Optokoppler (K1, K2) für jede Übertragungsrichtung liegt.

10. Schnittstelle nach Anspruch 9,
**dadurch gekennzeichnet,**
daß im Schnittstellenwandler (SW) auf der Verbindungsseite zur ersten Schnittstelle ( P1) die Leuchtdiode (LED1) des ersten Optokopplers (K1) in Reihe zum Phototransistor (PT1) des zweiten Optokopplers (K2) liegt, daß an dem gemeinsamen Verbindungspunkt der Leuchtdiode (LED1) des ersten Optokopplers (K1) und des Phototransistors (PT2) des zweiten Optokopplers (K2) der Neutralleiter (N) des Netzes angeschlossen ist, daß die Elektroden des Phototransistors (PT1) des ersten Optokopplers (K1) und der Leuchtdiode (LED2) des zweiten Optokopplers (K2) an eine mehrpolige Steckverbindung (V) angeschlossen sind, über die die zweite Steuerschaltung (PC) anschließbar ist.

11. Schnittstelle nach Anspruch 10,
**dadurch gekennzeichnet,**
daß an der Steckverbindung (V) ein Personalcomputer (PC) angeschlossen ist.

12. Schnittstelle nach einem der Ansprüche 1 bis 11,
**dadurch gekennzeichnet,**
daß die erste Steuerschaltung ( P1) einen Elektromotor (M) steuert.

13. Schnittstelle nach Anspruch 12,
**dadurch gekennzeichnet,**
daß der Elektromotor (M) Bestandteil eines Antriebs für einen Rolladen, eine Jalousie, eine Sonnenblende, eine Markise oder ein ähnliches Behänge ist.
